# EUROPÄISCHE PATENTSCHRIFT

(11) **EP 2 433 746 B1**
(45) Veröffentlichungstag und Bekanntmachung des Hinweises auf die Patenterteilung: **29.05.2013**
(21) Anmeldenummer: 11182592.3
(22) Anmeldetag: 23.09.2011
(51) Int. Cl.: B23Q 17/09, F16C 33/48

(54) **Drehbare Werkzeugaufnahme für ein Werkzeug-Voreinstellgerät oder dergleichen**
Rotatable tool holder for a tool presetter or the like
Réception d'outil rotative pour un appareil de préréglage d'outil ou analogue

(30) Priorität: 24.09.2010 DE 102010037763
(43) Veröffentlichungstag der Anmeldung: 28.03.2012
(73) Patentinhaber: Tschorn GmbH, 73655 Plüderhausen (DE)
(72) Erfinder: Tschorn, Franz, 73655 Plüderhausen (DE); Tschorn, Ralf, 73655 Plüderhausen (DE)
(74) Vertreter: Rüger, Barthelt & Abel

(56) Entgegenhaltungen:
- EP-A1- 2 012 030
- EP-A2- 0 498 232
- DE-A1- 4 027 264
- DE-A1-102007 046 164
- FR-A1- 2 329 443

## Beschreibung

Die vorliegende Erfindung betrifft eine drehbare Werkzeugnahaufnahme und insbesondere eine Werkzeugaufnahme zur Verwendung in einem Werkzeug-Voreinstellgerät oder dergleichen.

In der Produktion werden häufig Werkzeug-Voreinstellgeräte eingesetzt, um Werkzeuge, insbesondere rotationssymmetrische Werkzeuge, wie z.B. Fräs-, Bohr- und Ausdrehwerkzeuge, für Bearbeitungsmaschinen im Vorfeld zu vermessen und ggf. voreinzustellen. Damit können zeitaufwendige Werkzeugeinstellungen an der Maschine selbst vermieden oder zumindest verkürzt werden. Insbesondere bei CNC-gesteuerten Bearbeitungsmaschinen ist es möglich, parallel zum Maschineneinsatz mit einem Werkzeug genaue Maße, wie bspw. Höhenmaße oder Durchmessermaße einer Werkzeugschneide, eines nachfolgenden Werkzeugs zu bestimmen und diese bei der Umrüstung der Steuerung der Bearbeitungsmaschine zu melden, um die Umrüstzeit zu verkürzen.

Zur genauen Vorvermessung und toleranzarmen Voreinstellung müssen die Werkzeuge in dem Voreinstellgerät präzise gelagert werden. Hierzu sind drehbare Werkzeugaufnahmen bekannt, die einen drehbar gelagerten Werkzeugträger aufweisen, der im Einsatz den Werkzeugschaft des zu vermessenden Werkzeugs aufnimmt. Häufig ist der Werkzeugträger zur Anpassung an übliche Werkzeugschäfte als Kegelhülse ausgeführt. Die axiale und radiale Lagerung der Kegelhülse erfolgt üblicherweise über Wälzlager, z.B. Kugellager oder Nadellager, wobei allein für die Radiallagerung zwei längs der Achse im Abstand und koaxial zueinander angeordnete Wälzlager erforderlich sind. Dies ergibt einen aufwändigen und kostenintensiven Aufbau.

Dieser Aufbau kann dennoch keine hochpräzise Drehlagerung sicherstellen. Dies insbesondere, weil Wälzlager mit unterschiedlichen Maßtoleranzen gefertigt werden. Es ist schwierig, ein Wälzlagerpaar für die Werkzeugaufnahme derart passend zueinander auszuwählen und auszurichten, dass die Werkzeugaufnahme selbst keine oder nur vernachlässigbare Fehler, insbesondere Rundlauffehler aufweist. Häufig wird hierbei nach dem "Try and Error"-Prinzip verfahren. Es werden zwei Wälzlager willkürlich ausgewählt und eingebaut und die Rundlaufeigenschaften der Werkzeugaufnahme überprüft. Daraufhin werden die Wälzlager gegeneinander verdreht und die Rundlaufeigenschaften bei der neuen relativen Anordnung überprüft. Dies wird wiederholt, bis die hinsichtlich des Rundlaufs beste relative Anordnung der beiden Wälzlager gefunden wurde. Diese Vorgehensweise ist äußerst mühsam und langwierig und lässt dennoch Spiele zu, die zu erheblichen Maßtoleranzen an zu bearbeitenden Werkstücken führen können. Außerdem sind Wälzlager relativ verschleißempfindlich.

Darüber hinaus ist beobachtet worden, dass Wälzlager zu Beginn der Vorvermessung bzw. Voreinstellung zu "rucken" neigen, was auf ein leichtes Festsitzen der Wälzkörper der Wälzlager zurückzuführen ist. Derartiges Festsitzen und Rucken der Wälzlager ist bei der Vermessung störend und unerwünscht.

DE 40 27 264 A1 beschreibt eine Werkzeugaufnahme für ein Werkzeug-Voreinstellgerät, die einige der vorstehend beschriebenen Unzulänglichkeiten beseitigt. Die Werkzeugaufnahme weist eine den kegelförmigen Werkzeugschaft eines Werkzeugs aufnehmende Kegelhülse auf, die in einer gehäusefesten Pinole durch Axial- und Radiallager abgestützt drehbar gehalten ist. Zumindest das Radiallager besteht aus einem ausgehärteten Gießharz, das in einen durch die Pinole und die darin eingesetzte Kegelhülse begrenzten Hohlraum eingespritzt wird. Nachdem das Gießharz harz bei in der Pinole vormontierter Kegelhülse eingespritzt wird, kann sich das Radiallager gut an die jeweiligen Bedingungen anpassen, so dass auftretende Spiele beseitigt werden.

Wenngleich auf diese Weise eine spielarme Lagerung der Kegelhülse in der Pinole erzielt werden kann, sind der Aufbau der Werkzeugaufnahme relativ kompliziert und deren Herstellung und Nutzung relativ aufwendig. Bspw. müssen in der Pinole geeignete Einfüll- und Überlaufkanäle, die zu den lagerbildenden Hohlräumen führen, vorgesehen werden. Vor dem Einfüllen des Gießharzes wird ein Trennmittel auf die Hohlraumwände aufgebracht, das nach dem Aushärten des Gießharzes wieder entfernt werden muss. Ferner wird auf die Lagerstellen eine reibmindernde Schicht aus Teflon aufgetragen oder dort Schmierfett zugeführt. Ohne diese zusätzlichen Maßnahmen wäre eine verschleißarme, langlebige und hochgenaue Lagerung der Kegelhülse kaum möglich. Außerdem ist das Gießharzlager nur für die eine einzige Kegelhülse geeignet und unveränderbar. Es bietet keine Einstellmöglichkeit der Lagerung bspw. zur Anpassung an weitere Kegelhülsen und unterschiedliche Fertigungstoleranzen. Eine derartige Einstellbarkeit wäre aber von Vorteil.

EP 2 012 030 A1 beschreibt eine drehbare Werkzeugaufnahme, insbesondere für ein Werkzeug-Voreinstellgerät, mit einem Werkzeugträger zur Aufnahme eines Werkzeugs in Form eines Wälzlagerkäfigs und mit einer Lagerbuchse, in der der Werkzeugträger drehbar gelagert ist. Zur radialen Drehlagerung des Werkzeugträgers in Bezug auf die Lagerbuchse ist eine Lagereinrichtung vorgesehen, die in Öffnungen des Wälzlagerkäfigs jeweils einzeln eingebettete Kugeln aufweist. Die Kugeln stehen über die Außen- und die Innenmantelfläche des Wälzlagerkäfigs hervor, so dass sie punktförmige Auflagen für die Lagerbuchse bilden und bei einer Relativdrehung des Wälzlagerkäfigs auf der Lagerbuchse abrollen. In manchen Ausführungsformen bilden die Kugeln zwei axial voneinander beabstandete Kugelkränze, die jeweils kreisförmig entlang des Wälzlagerkäfigumfangs verlaufen und in denen die Kugeln gruppenweise, mit wenigstens zwei Kugeln pro Gruppe auf zu Umfangslinien geneigten Linien oder Zick-Zack-Linien um die Umfangslinien angeordnet sind.

Davon ausgehend ist es Aufgabe der vorliegenden Erfindung, die obigen Nachteile und Unzulänglichkeiten zu beseitigen oder zu minimieren und eine für die eingangs erwähnten Anwendungen zur Werkzeug-Voreinstellung geeignete Werkzeugaufnahme zu schaffen, die einen einfachen, langlebigen Aufbau aufweist und leicht herzustellen und zu montieren ist. Insbesondere sollte die Werkzeugaufnahme eine genaue, möglichst spielfreie Lagerung des Werkzeugträgers in der Lagerbuchse und somit hohe Genauigkeiten bei der Vermessung bzw. Voreinstellung eines Werkzeugs ermöglichen.

Eine weitere Aufgabe der vorliegenden Erfindung ist es, eine derartige Werkzeugaufnahme zu schaffen, die eine Einstellung der Lagerung des Werkzeugträgers in der Lagerbuchse, um Spiele zu minimieren und eine leichtgängige Drehung des Werkzeugträgers sicherzustellen, ermöglicht.

Diese und weitere Aufgaben werden durch die erfindungsgemäße Werkzeugaufnahme mit den Merkmalen des Patentanspruchs 1 gelöst.

Die für ein Werkzeug-Voreinstellgerät oder dergleichen bestimmte drehbare Werkzeugaufnahme gemäß der Erfindung weist einen Werkzeugträger zur Aufnahme eines Werkzeugs, insbesondere Fräs-, Bohr- oder Drehwerkzeugs, bspw. für CNC-gesteuerte Werkzeugbearbeitungsmaschinen, und eine Lagerbuchse auf, in der der Werkzeugträger drehbar gelagert ist. Erfindungsgemäß ist zur radialen Drehlagerung des Werkzeugträgers in Bezug auf die Lagerbuchse eine Lagereinrichtung auf der Basis einer Dreipunkt-Gleitlagerung vorgesehen. Unter einer Dreipunkt-Gleitlagerung ist zu verstehen, dass der Werkzeugträger an drei um den Umfang herum verteilten punktartigen Lagerstellen gleitend drehbar gelagert ist.

Erfindungsgemäß weist die Lagereinrichtung ein erstes Dreipunktlager und ein zweites Dreipunktlager auf, die entlang einer Längsachse der Werkzeugaufnahme im Abstand zueinander angeordnet sind und jeweils drei punktartige Lagerstellen zur Lagerung des Werkzeugträgers in der Lagerbuchse aufweisen. Die drei punktartigen Lagerstellen weisen wenigstens eine bezüglich der Längsachse der Werkzeugaufnahme radial verstellbare Lagerstelle auf.

Durch die Erfindung wird eine hochgenaue, statisch und dynamisch ausgewogene Lagerung des Werkzeugträgers in der Lagerbuchse mit einfachen und kostengünstigen Mitteln erzielt. Die mit Lagerungen nach dem Stand der Technik verbundenen Nachteile, insbesondere der Aufwand und die zugehörigen Kosten, können vermieden werden. Ein Festsitzen der Lager und ruckbehaftete Voreinstellungen, wie bei der Verwendung von Wälzlagern, treten nicht auf. Die erfindungsgemäße Dreipunkt-Gleitlagerung ist verschleißarm und ermöglicht einen leichtgängigen Lauf auch nach längerer Einsatzdauer.

Die erfindungsgemäße Lagereinrichtung bildet ein Radiallager der Werkzeugaufnahme. Der Werkzeugträger wird in zwei parallelen Lagerebenen jeweils an drei punktartigen Lagerstellen an der Lagerbuchse gelagert. Die drei Lagerstellen ergeben eine statisch und dynamisch bestimmte Lagerung. Die wenigstens eine radial verstellbare Lagerstelle dient zur einstellbaren radialen Fixierung des Werkzeugträgers.

In einer Ausführungsform der Erfindung ist der Werkzeugträger der erfindungsgemäßen Werkzeugaufnahme in Form einer im Wesentlichen rotationssymmetrischen Hülse ausgebildet, die eine Außenumfangsfläche und eine Innenumfangsfläche zur formschlüssigen Aufnahme des Werkzeugs aufweist. Der Werkzeugträger ist vorzugsweise aus Edelstahl oder einem anderen geeigneten Material hoher Verschleißfestigkeit gefertigt, und die Au-βen― und Innenumfangsfläche sind vorzugsweise durch Schleifen mit hoher Präzision gefertigt.

In einer bevorzugten Ausführungsform ist die Hülse als Kegelhülse mit einem kegelstumpfförmigen Aufnahmeabschnitt zur Aufnahme eines Werkzeugschafts eines Werkzeugs und bspw. einem sich daran anschließenden zylindrischen Abschnitt ausgebildet. Die Hülse kann insbesondere als Steilkegelhülse mit genormtem Aufnahmekonus, wie bspw. einem SK- oder HSK-Konus, für Normwerkzeuge eingerichtet sein. Für andere Werkzeuge könnte die Hülse jedoch auch einen bspw. zylindrischen oder anderen, geeignet gestalteten Aufnahmeabschnitt aufweisen.

Die Lagerbuchse ist in einer einfachen Ausführungsform der Erfindung in Form eines Kreiszylinders mit einer kreiszylindrischen äußeren Mantelfläche und einer hierzu koaxialen, kreiszylindrischen inneren Mantelfläche ausgebildet. Die Lagerbuchse kann insbesondere aus Grauguss hergestellt sein. Es sind auch andere Materialien, z.B. Edelstahl, möglich.

Zur axialen Lagerung des Werkzeugträgers in Bezug auf die Lagerbuchse ist vorzugsweise ein gesondertes Axiallager vorgesehen. Dieses kann durch ein Wälzlager, bspw. ein Kugel-, Rollen- oder Nadellager, gebildet sein. Es könnte jedoch auch ein Gleitlager verwendet werden. Das Axiallager ist eingerichtet und angeordnet, um durch das Gewicht des Werkzeugträgers ausgeübte Druckkräfte aufzunehmen und eine Verdrehung des Werkzeugträgers in Bezug auf die Lagerbuchse zu unterstützen.

In einer vorteilhaften Ausführungsform der Erfindung ist das Axiallager an einer Stirnfläche der Lagerbuchse vorgesehen. Es kann in einer ringförmigen Ausnehmung untergebracht sein, die zu der Stirnfläche und einer inneren Mantelfläche der Lagebuchse hin offen ist und die durch eine innere Radialfläche alfläche und eine äußere Axialfläche definiert ist. Der Werkzeugträger weist vorzugsweise eine gestufte Außenumfangsfläche mit einer axialen Schulter auf, die einen zylindrischen Lagerabschnitt mit verringertem Durchmesser mit einem koaxialen zylindrischen Endabschnitt mit vergrößertem Durchmesser verbindet. Im zusammengesetzten Zustand bildet die von der inneren Radialfläche und der äußeren Axialfläche der Lagerbuchse sowie von der axialen Schulter und dem Lagerabschnitt des Werkzeugträgers begrenzte Ausnehmung einen Hohlraum, in dem das Axiallager geschützt untergebracht ist.

Die Lagerstellen jedes Drehpunktlagers sind vorzugsweise längs des Umfangs gleichmäßig voneinander beabstandet, weisen also einen Abstand von 120° zueinander auf. Damit wird eine gute Abstützung und weitgehend gleichmäßige Belastungsaufnahme um den Umfang herum erhalten. Es hat sich ferner als vorteilhaft erwiesen, die Lagerstellen der beiden Drehpunktlager in axialer Richtung in einer Linie zueinander auszurichten, um eine einwandfreie Abstützung zu fördern und gegenseitige Störbeeinflussungen der beiden Lager zu vermeiden.

In einer besonders bevorzugten Ausführungsform der Erfindung ist die Lagereinrichtung ferner mit einer Einstelleinrichtung versehen, die eine Einstellung der Lagerung des Werkzeugträgers in der Lagerbuchse oder des Spiels zwischen diesen ermöglicht. Mit der Einstelleinrichtung kann die Anordnung des Werkzeugträgers in Bezug auf die Lagerbuchse passend eingestellt werden, um die Achsen des Werkzeugträgers und der Lagerbuchse parallel zueinander auszurichten und Rundlauffehler zu vermeiden und um eine weitgehend spielarme oder spielfreie Lagerung zu erhalten, dabei aber einen leichte Verdrehbarkeit des Werkzeugträgers sicherzustellen.

In einer bevorzugten Ausführungsform der Erfindung weist jedes Dreipunktlager zwei feste Lagerstellen und eine bezüglich einer Längsachse der Werkzeugaufnahme radial verstellbare Lagerstelle auf. Die festen Lagerstellen bilden Fixierpunkte bzw. feste Bezugspunkte, die an der inneren Mantelfläche der Lagerbuchse angeformt, insbesondere mit höchster Präzision angeschliffen sind. Die dritte Lagerstelle dient zur einstellbaren radialen Fixierung des Werkzeugträgers. Die drei Lagerstellen ergeben eine statisch und dynamisch bestimmte Lagerung. Es könnten auch zwei oder alle drei der Lagerstellen einstellbar eingerichtet sein, um eine Ausrichtung des Werkzeugträgers relativ zu der Lagebuchse in Bezug auf die Längsachse der Werkzeugaufnahme in verschiedenen Richtungen zu ermöglichen. Allerdings wird die Ausführungsform mit einer einzigen einstellbaren Lagerstelle pro Lager aufgrund der geringen Komplexität und Kosten sowie der einfachen Handhabung bevorzugt.

In einer speziellen Ausführungsform der Erfindung ist die wenigstens eine verstellbare Lagerstelle an einem Einsatz ausgebildet, der wenigstens bereichsweise elastisch verformbar ist und der in der Lagerbuchse derart angeordnet ist, dass wenigstens sein elastisch verformbarer Bereich in einen Innenraum der Lagerbuchse hinein verformt und in Anlage gegen den Werkzeugträger gebracht werden kann. Der Einsatz kann ein Gewindeeinsatz sein, der in der Lagerbuchse eingesetzt ist

In einer Ausführungsform der Erfindung ist der Einsatz durch eine becherartige Gewindebuchse gebildet, die einen hülsenförmigen Buchsenabschnitt mit einem Innengewinde, ein offenes Ende und ein durch einen Buchsenboden geschlossenes zweites Ende aufweist. Der Buchsenboden ist in Axialrichtung, bezogen auf die Längsachse der Gewindebuchse, geringfügig elastisch verformbar, so dass die Einstellung der Lagerung bzw. des Spiels durch elastische Formung der eingebauten Gewindebuchse erfolgen kann.

Die Gewindebuchse sitzt vorzugsweise im Klemmsitz in einer radialen Durchgangsbohrung der Lagerbuchse, so dass ihre Längserstreckung mit der Radialrichtung der Werkzeugaufnahme zusammenfällt. Ihr offenes Ende ist von der Außenseite der Lagerbuchse aus zugänglich, während der Buchsenboden radial nach innen weist und in etwa auf Höhe der inneren Mantelfläche der Lagerbuchse abschließt. Durch Verformung des Buchsenbodens wird die Lagerbuchse mit dem Werkzeugträger in Eingriff gebracht, um diesen spielfrei und genau zu lagern.

Um eine kontrollierte Verformung zu erzielen, ist der Gewindebuchse eine Einstellschraube der Einstelleinrichtung zugeordnet, die ein Außengewinde trägt, das mit dem Innengewinde der Gewindebuchse zusammenwirkt, und ein Schraubenende aufweist, das eingerichtet ist, um mit dem Buchsenboden der Gewindebuchse in Eingriff zu kommen, um diesen elastisch zu verformen und mit einer Außenumfangsfläche des Werkzeugträgers in Kontakt zu bringen. Der Buchsenboden kann mit einer gewünschten Kraft gegen den Werkzeugträger belastet werden, um bei leichter Verdrehbarkeit jegliches Spiel zu beseitigen.

Vorteilhafterweise ist die auf die vorstehend beschriebene Weise gebildete Schraubverbindung zwischen der Einstellschraube und der Gewindebuchse selbstsichernd. Der elastisch verformte Buchsenboden übt eine Gegenkraft auf die Einstellschraube aus, die diese fixiert. Es ist keine Kontermutter oder sonstige Einrichtung erforderlich, um die Einstellschraube gegen das ungewollte Lösen oder Lockern im Einsatz zu sichern.

Die Gewindebuchse ist vorzugsweise aus Messing oder einem anderen Material, das die erforderliche Elastizität bei gleichzeitiger Gleitfähigkeit ermöglicht, gefertigt. Zu weiteren geeigneten Materialien gehören bspw. ungehärteter Stahl, Bor oder Lagerbronze.

Vorzugsweise sind die verstellbaren Lagerstellen der beiden Dreipunkt-Gleitlager der erfindungsgemäßen Lagereinrichtung in Axialrichtung in einer Linie zueinander angeordnet. Bspw. sind in der bevorzugten Ausführungsform die Gewindebuchsen mit den Einstellschrauben in den beiden Lagerebenen in Bezug auf die Längsachse der Werkzeugaufnahme an gleichen Umfangspositionen der Lagerbuchse angeordnet. Eine mögliche Klemmung des Werkzeugträges aufgrund fehlerhafter Lagerung wird dadurch vermieden. Die beiden Gleitlager sind möglichst weit voneinander entfernt, in jeweiligen Endbereichen der Lagerbuchse angeordnet, um die bestmögliche Genauigkeit und Einstellbarkeit zu erhalten.

Mit der erfindungsgemäßen Werkzeugaufnahme kann eine schnelle Einstellung der Lagerung des Werkzeugträgers an der Lagerbuchse zur Kompensation von Spielen zwischen diesen und zur Erzielung einer hohen Rundlaufgenauigkeit des Werkzeugträgers vorgenommen werden. Dadurch wird auch eine hohe Präzision bei der Vermessung und ggf. Voreinstellung des Werkzeugs in dem Voreinstellgerät sichergestellt. Dies hat wiederum eine hohe Maßhaltigkeit bei den hergestellten Werkstücken zur Folge.

Weitere vorteilhafte Einzelheiten der Erfindung ergeben sich aus Unteransprüchen, der Zeichnung sowie der zugehörigen Beschreibung. In der Zeichnung ist lediglich zu Veranschaulichungszwecken und nicht im Sinne irgendeiner Beschränkung ein Ausführungsbeispiel des Gegenstandes der Erfindung dargestellt. Es zeigen:
Fig. 1 eine Perspektivansicht eines Werkzeug-Voreinstellgerätes mit einer erfindungsgemäßen Werkzeugaufnahme, in vereinfachter Darstellung;
Fig. 2 eine isolierte Darstellung der in dem Voreinstellgerät nach Fig. 1 verwendeten Werkzeugaufnahme in einer vereinfachten Perspektivansicht;
Fig. 3 die Werkzeugaufnahme nach Fig. 1 und 2 in einer vereinfachten Perspektivansicht, zum Teil aufgeschnitten, in einem anderen Maßstab;
Fig. 4a die Lagerbuchse der erfindungsgemäßen Werkzeugaufnahme nach Fig. 1 bis 3 im Längsschnitt;
Fig. 4b die Lagerbuchse der erfindungsgemäßen Werkzeugaufnahme in Draufsicht;
Fig. 5 den Werkzeugträger der erfindungsgemäßen Werkzeugaufnahme nach Fig. 1 bis 3 im Längsschnitt; und
Fig. 6 Komponenten einer erfindungsgemäßen Einstelleinrichtung zur Einstellung des Spiels zwischen dem Werkzeugträger und der Lagerbuchse.

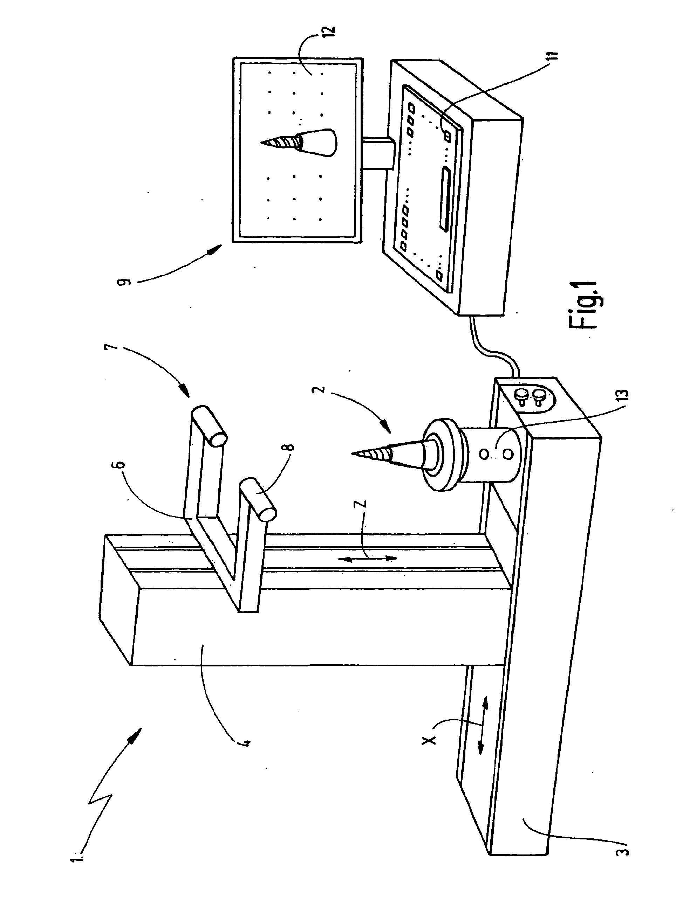

In Fig. 1 ist in stark vereinfachter Darstellung ein Werkzeug-Voreinstellgerät 1 veranschaulicht, das dazu dient, ein Werkzeug 2 im Vorfeld, vor dem Einsatz in einer Werkzeugbearbeitungsmaschine zu vermessen und gegebenenfalls voreinzustellen, um die Rüstzeiten an der Bearbeitungsmaschine zu verkürzen. Die Werkzeugbearbeitungsmaschine kann bspw. eine CNC-gesteuerte Maschine oder ein Bearbeitungszentrum sein, und das Werkzeug 2 ist bspw. ein beliebiges rotationssymmetrisches Werkzeug, z.B. ein Bohr-, Fräs- oder Drehwerkzeug.

In der veranschaulichten Konfiguration weist das Werkzeug-Voreinstellgerät 1 einen Grundkörper 3 auf, auf dem eine Messsäule 4 in horizontaler x-Richtung verschiebbar gelagert ist. An der Messsäule 4 ist wiederum ein Schlitten 6 in vertikaler z-Richtung verschiebbar gelagert. Der Messschlitten 6 trägt einen Messkopf 7, der hier eine Kamera 8 aufweist, mit der das Werkzeug 2 aufgenommen werden kann. Die dabei erfassten Bilder werden zu einem Computersystem 9 übermittelt, das ein Programm zur Auswertung der Bilddaten aufweist, um daraus weitere Daten in Bezug auf die Werkzeuggeometrie zu gewinnen. Das Computersystem 9 weist ferner eine Tastatur 11 und/oder eine sonstige Bedienereingabevorrichtung und einen Bildschirm 12 auf, auf dem Bilder des Werkzeugs 2 gemeinsam mit den ermittelten Daten angezeigt werden können. Zu den ermittelten Werkzeuggeometriedaten gehören insbesondere Maße in Bezug auf die Höhe der Werkzeugschneide über einer Bezugsebene, den Durchmesser der Werkzeugschneide bezüglich einer Werkzeugachse und andere Maße, die für eine Werkzeugbearbeitungsmaschine insofern relevant sein können, als sie die Genauigkeit bei der Bearbeitung eines Werkstücks beeinflussen können. Die ermittelten Daten von einem speziellen Werkzeug werden zu der Bearbeitungsmaschine übermittelt, um dort schnell eine Feineinstellung des jeweiligen Werkzeugs vornehmen zu können.

Das in Fig. 1 veranschaulichte Werkzeug-Voreinstellgerät ist lediglich beispielhafter Natur und stark schematisiert dargestellt. So sind bspw. Steuer- und Antriebselemente zum Verfahren der Messsäule und des Messkopfes hier nicht näher veranschaulicht. Der Messkopf 7 könnte auch andere Messeinrichtungen mit bspw. taktilen Sensoren aufweisen. Die Daten müssen nicht in elektronischer Form erfasst werden, und ein Computersystem ist nicht zwingend erforderlich. Wichtig ist aber, dass eine drehbare Werkzeugaufnahme 13 vorgesehen ist, in der ein insbesondere rotationssymmetrisches Werkzeug präzise drehbar gelagert werden kann, um genau vermessen oder voreingestellt zu werden.

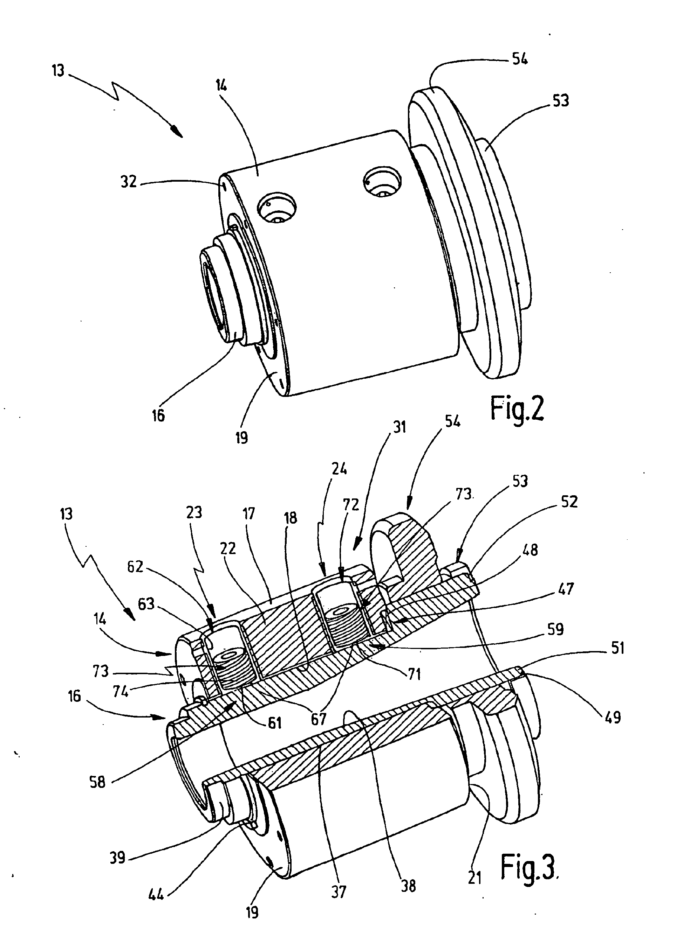

Die Werkzeugaufnahme 13 gemäß der vorliegenden Erfindung ist in größeren Einzelheiten in den Figuren 2 und 3 als Baueinheit veranschaulicht. Fig. 2 zeigt die Baueinheit in vereinfachter perspektivischer Ansicht, während die Baueinheit in Fig. 3 teilweise aufgeschnitten ist, um auch die inneren Komponenten zu veranschaulichen.

Die Werkzeugaufnahme 13 weist im Wesentlichen eine Lagerbuchse 14 und einen Werkzeugträger 16 auf, der in der Lagerbuchse 14 drehbar gelagert ist. Die Lagerbuchse 14 weist eine kreiszylindrische Form auf, während der Werkzeugträger 16 in Form einer Kegelhülse ausgebildet ist, die sich zur Aufnahme eines kegelförmigen Werkzeugschaftes eines Werkzeugs 2 eignet.

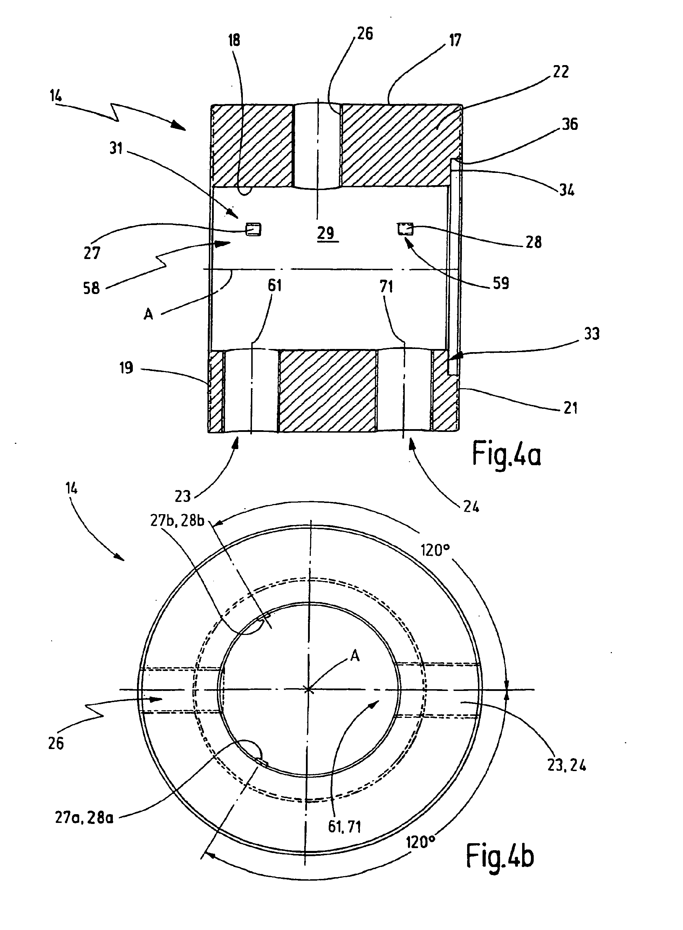

Unter weiterer Bezugnahme auf die Figuren 2 und 3 ist die erfindungsgemäße Lagerbuchse 14 gesondert in Fig. 4a im Längsschnitt und in Fig. 4b in Draufsicht veranschaulicht. Die Lagerbuchse 14 weist eine kreiszylindrische äußere Mantelfläche 17 auf, die eine Achse A der Lagerbuchse 14 definiert, die hier auch als die Längsachse A der Werkzeugaufnahme 13 definiert sein soll. Die Lagerbuchse 14 weist ferner eine koaxiale kreiszylindrische innere Mantelfläche 18 sowie eine erste und eine zweite axiale Stirnfläche 19, 21 auf.

Die äußere Mantelfläche 17 der Lagerbuchse 14 kann feinbearbeitet und vorgesehen sein, um in einer Aufnahmeöffnung des Grundkörpers 3 des Werkzeug-Voreinstellgerätes präzise aufgenommen zu werden. Gemeinsam mit der inneren Mantelfläche 18 bildet die äußere Mantelfläche 17 eine massive Buchsenwand 22, die eine für hohe Festigkeit ausreichende Stärke aufweist, die bspw. in etwa dem halben Radius der Buchse entspricht. Die Lagerbuchse 14 kann bspw. aus Grauguss hergestellt sein.

In der Buchsenwand 22 sind mehrere Bohrungen 23, 24 und 26 eingerichtet, die in Radialrichtung von der äußeren Mantelfläche 17 zu der inneren Mantelfläche 18 durchgehend verlaufen. Die Durchgangsbohrungen 23, 24 sind axial im Abstand zueinander an gleicher Umfangsposition, also axial in einer Linie in der Nähe der jeweiligen Stirnflächen 19, 21 angeordnet. Sie dienen der Aufnahme von Komponenten einer erfindungsgemä-βen Dreipunkt-Lagereinrichtung zur drehbaren Lagerung des Werkzeugträgers 16 an der Lagerbuchse 14, wie es noch weiter nachstehend beschrieben ist. Die dritte Bohrung 26 ist hier in Umfangsrichtung um 180 Grad von den Bohrungen 23, 24 beabstandet angeordnet und dient der Indexierung, um die relative Drehlage der Werkzeugaufnahme 13 in Bezug auf das Werkzeug-Voreinstellgerät 1 erfassen zu können.

In der inneren Mantelfläche 18 der Lagerbuche 14 sind feste Lagerpunkte 27, 28 angeformt, die zu der erfindungsgemä-βen Lagereinrichtung gehören und als feste Bezugspunkte zur radialen Fixierung des Werkzeugträgers 16 in Bezug auf die Lagerbuchse 14 dienen. Wie insbesondere aus Fig. 4b ersichtlich, sind zwei punktartige Lagerstellen 27a, 27b im Abstand von 120 Grad von der Bohrung 23 sowie zueinander in Form von Vorsprüngen, die geringfügig in den Innenraum 29 der Lagerbuchse 14 hineinragen, ausgebildet. Die Lagerstellen 27a, 27b weisen eine kleine Stirnfläche auf, die einen punktförmigen Kontakt mit dem Werkzeugträger 16 ermöglicht. Die Lagerstellen 27a, 27b sind in Axialrichtung in etwa mit der Mitte der Bohrung 23 ausgerichtet. In gleicher Weise sind punktartige Lagerstellen 28a, 28b, die im Wesentlichen identisch mit den Lagerstellen 27a, 27b ausgebildet sind, in Umfangsrichtung um 120 Grad von der Bohrung 24 und voneinander angeordnet und mit der Mitte der Bohrung 24 ausgerichtet.

Die Lagerstellen 27a, 27b und die Bohrung 23 definieren eine erste Lagerebene, und die Lagerstellen 28a, 28b und die Bohrung 24 definieren eine zweite Lagerebene einer erfindungsgemäßen Lagereinrichtung 31 zur drehbaren Lagerung des Werkzeugträgers 16 in der Lagerbuchse 14. Die Lagereinrichtung 31 ist weiter unten näher beschrieben.

Wie aus den Figuren 2 und 3 hervorgeht, sind in der ersten axialen Stirnfläche 19 Befestigungslöcher 32 vorgesehen, die der Befestigung der Werkzeugaufnahme 13 in dem Grundkörper 3 des Werkzeug-Voreinstellgerätes 1 dienen. In der gegenüberliegenden Stirnfläche 21 ist eine ringförmige Ausnehmung 33 eingearbeitet, die koaxial zu der Achse A derart ausgebildet ist, dass sie zu der Stirnseite 21 und der radial inneren Seite hin offen ist. Die Ausnehmung 33 ist von einer axialen Randfläche 34 und einer radialen Randfläche 36 begrenzt.

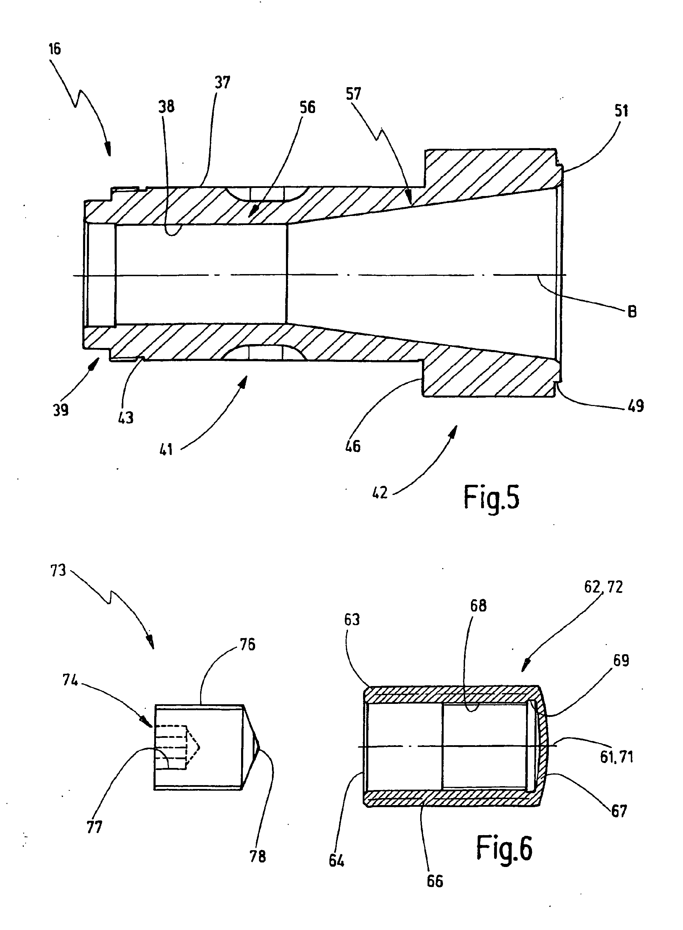

Der erfindungsgemäße Werkzeugträger 16 ist detaillierter in Fig. 5 veranschaulicht. Wie bereits erwähnt, weist der Werkzeugträger 17 eine hülsenförmige Gestalt mit einer Außenumfangsfläche 37 und einer in Bezug auf eine Achse B des Werkzeugträgers koaxiale Innenumfangsfläche 38 auf.

Die Außenumfangsfläche 37 des Werkzeugträgers 16 ist mehrfach gestuft mit einem ersten Endabschnitt 39 eines ersten Durchmessers, einem mittleren Abschnitt 41 mit einem größeren, mittleren Durchmesser und einem zweiten Endabschnitt 42 mit dem größten Durchmesser ausgebildet. Der erste Endabschnitt 39 ragt über das in den Figuren 2 und 3 linke Ende, über die axiale Stirnfläche 19 hinaus aus der Lagerbuchse 14 nach außen vor. Obwohl dies hier nicht vorgesehen ist, könnte der erste Endabschnitt 39 auch zur Antriebsverbindung mit einer automatisierten Drehantriebseinrichtung eingerichtet zu sein.

Der mittlere Abschnitt 41 ist als ein im Wesentlichen zylindrischer Lagerabschnitt ausgebildet, der in der Lagerbuchse 14 gelagert ist. Er weist in der Nähe des ersten Endabschnitts 39 eine Ringnut 43 auf, die einen Sicherungsring 44, hier einen Seegerring, aufnimmt (vgl. Figuren 2 und 3). Der Sicherungsring 44 dient der axialen Lagesicherung des Werkzeugträgers 16 in Bezug auf die Lagerbuchse 14 im montierten Zustand. Der mittlere Abschnitt 41 ist über eine axiale Schulter 46 mit dem zweiten Endabschnitt 42 der Außenumfangsfläche 37 verbunden. Wie insbesondere aus Fig. 3 ersichtlich, liegt die axiale Schulter 46 der axialen Randfläche 34 der Lagerbuchse 14 im Abstand gegenüber und definiert gemeinsam mit dieser sowie mit der radialen Randfläche 36 und dem Endbereich des mittleren Abschnitts 41 der Außenumfangsfläche 37 einen ringförmigen Hohlraum 47. In dem Hohlraum 47 ist ein hier lediglich schematisiert angedeutetes Axiallager 48, vorzugsweise ein Wälzlager oder aber auch ein Gleitlager, zur axialen Lagerung des Werkzeugträgers 16 an der Lagerbuchse 14 angeordnet. Wenn sich die Werkzeugaufnahme 13 in der in Fig. 1 veranschaulichten Einsatzstellung befindet, nimmt das Axiallager im Wesentlichen durch das Gewicht des Werkzeugträgers und des darin eingesetzten Werkzeugs bedingte Druckkräfte auf, so dass sich der Werkzeugträger 16 in Bezug auf die Lagerbuchse 14 drehen lässt.

Der zweite Endabschnitt 42 der Außenumfangsfläche 37 verläuft ausgehend von der Schulter 46 bis zu einer ringförmigen Aussparung 49 an der Verbindungsstelle zwischen der Außenumfangsfläche 37 und einer vorderen Stirnfläche 51 des Werkzeugträgers 16. In der Aussparung 49 ist ein radialer Vorsprung 52 eines Referenzringes 53 angeordnet, der eine Referenzfläche für die Kamera 8 des Werkzeug-Voreinstellgerätes 1 oder eine sonstige Messeinrichtung definiert. Außerdem ist an dem zweiten Endabschnitt 42 der Außenumfangsfläche 37 ein Handrad 54 befestigt, das vom Bediener dazu verwendet werden kann, den Werkzeugträger in Bezug auf die Lagerbuchse zu verdrehen, um das Werkzeug 2 in eine für die Vermessung bzw. Voreinstellung gewünschte Drehposition zu überführen.

Die Innenumfangsfläche 38 des Werkzeugträgers 16 weist hier einen zylindrischen Teilabschnitt 56 und einen konischen Teilabschnitt 57 auf, der den Aufnahmekonus für einen Werkzeugschacht des Werkzeugs 2 definiert. Der Aufnahmekonus kann ein für Werkzeuge normierter Konus, wie er bei Kegelhülsen üblich ist, sein. Für Werkzeuge mit zylindrischem Werkzeugschaft kann der Aufnahmekonus entfallen.

Wie bereits erwähnt, ist der Werkzeugträger 16 durch eine Lagereinrichtung 31 in Bezug auf die Lagerbuchse 14 drehbar gelagert, um insbesondere rotationssymmetrische Werkzeuge ringsum vermessen zu können. Während das Axiallager 48 für die axiale Abstützung sorgt, sorgt die erfindungsgemäße Lagereinrichtung 31 für die Lagerung in radialer Richtung. Dabei ist sie als Dreipunkt-Gleitlagereinrichtung mit zwei Lagerebenen ausgebildet. D.h., der Werkzeugträger wird in zwei axial zueinander parallelen Ebenen an jeweils drei punktartigen Lagerstellen drehbar gleitend gelagert. Die Lagereinrichtung 31 weist hierzu ein erstes radiales Dreipunkt-Gleitlager 58 und ein zweites radiales Dreipunkt-Gleitlager 59 auf. Diese Lager 58, 59 sind im Wesentlichen identisch gestaltet, so dass es genügt, lediglich eines dieser Lager detaillierter zu beschreiben und die Ausführungen entsprechend für das zweite Lager gelten.

Das erste Dreipunkt-Gleitlager 58 weist die zwei festen Lagerstellen 27a, 27b auf, die an der Innenmantelfläche 18 passend angeformt sind, und eine bezüglich der Achse A der Lagerbuchse 14 radial verstellbare dritte Lagerstelle 61 auf. Diese ist an einem von der Lagerbuchse 14 gesonderten Gewindeeinsatz 62 vorgesehen, der in der Radialbohrung 23 der Lagerbuchse 14 eingesetzt ist. Der Gewindeeinsatz 62 ist durch eine becherartige Gewindebuchse 63 gebildet, die im Detail in Fig. 6 veranschaulicht ist.

Die Gewindebuchse 63 weist ein offenes Ende 64, einen länglichen, hülsenförmigen Abschnitt 66 und ein durch einen Buchsenboden geschlossenes zweites Ende 67 auf. Die Gewindebuchse 63 ist derart in der Radialbohrung 23 angeordnet, dass das offene Ende 64 nach außen weist, während der Buchsenboden radial nach innen ausgerichtet ist. Der hülsenförmige Abschnitt 66 trägt an dem dem Buchsenboden 67 benachbarten inneren Teilabschnitt ein Innengewinde 68. Der Buchsenboden 67 weist eine leicht nach außen gewölbte Konfiguration auf und ist geringfügig elastisch gestaltet, so dass er sich in Richtung der Längserstreckung der Gewindebuchse 63 leicht elastisch verformen lässt. Zu diesem Zweck ist die Wanddicke des Buchsenbodens 67 im Vergleich zu derjenigen des hülsenförmigen Abschnitts 66 geringer gewählt und beträgt hier in etwa 1,5 mm. Außerdem ist innen an der Verbindungsstelle zwischen dem hülsenförmigen Abschnitt 66 und dem Buchsenboden 67 eine Einkerbung 69 ausgebildet, die ebenfalls die elastische Verformbarkeit des Buchsenbodens 67 fördert. Ferner ist das Material der Gewindebuchse passend gewählt, um die Elastizität zu ermöglichen. Die Gewindebuchse 63 kann aus Messing oder anderem passenden Material gefertigt sein. Die Außenseite des elastisch verformbaren Buchsenbodens 67 definiert die verstellbare dritte Lagerstelle 61.

In ähnlicher Weise weist das zweite Dreipunkt-Gleitlager 59 eine in Bezug auf die Längsachse A der Werkzeugannahme 13 radial verstellbare dritte Lagerstelle 71 auf, die an einem Gewindeeinsatz 72 ausgebildet ist, das ebenfalls durch eine Gewindebuchse, insbesondere eine identische Gewindebuchse 63, wie in Fig. 6 veranschaulicht, gebildet ist. Um Wiederholungen zu vermeiden, wird auf die vorstehende Beschreibung der Gewindebuchse 63 verwiesen.

Die radial verstellbaren Lagerstellen 61, 71 der Dreipunkt-Gleitlager 58, 59 ermöglichen eine individuelle Einstellung des Spiels zwischen dem Werkzeugträger 16 und der Lagerbuchse 14. Hierzu dient eine Einstelleinrichtung 73, die dem Bediener die Einstellung des Spiels erleichtert. Die Einstelleinrichtung 73 ist im Wesentlichen durch die Gewindebuchse 63 und eine zugehörige Einstellschraube 74 gebildet, die hier in Form einer Madenschraube ausgebildet ist. Die Einstellschraube 74 weist ein Außengewinde 76, das mit dem Innengewinde 68 der Gewindebuchse 63 zusammenwirkt, einen zur Aufnahme eines Werkzeugs eingerichteten Schlitz 77, der hier durch einen Innensechskant gebildet ist, und ein zum Eingriff an dem Buchsenboden 67 passend eingerichtetes, bspw. gerundetes Ende 78 auf.

Die erfindungsgemäße Werkzeugaufnahme 13 kann als vormontierte und voreingestellte Baueinheit geliefert und bspw. an dem Werkzeug-Voreinstellgerät 1 befestigt werden. Zur Vormontage wird der Werkzeugträger 16 bei gelockerten Einstellschrauben 74 von der zweiten axialen Stirnseite 21 aus in Axialrichtung in den Innenraum 29 der Lagerbuchse 14 eingeführt, bis die axiale Schulter 46 mit dem Axiallager 48 in Anlage gelangt, das zuvor in die Ausnehmung 33 bzw. den Hohlraum 47 eingesetzt wird. Die gesamte Anordnung wird in ihrer Lage axial gesichert, indem der Sicherungsring 44 in die Ringnut 43 an dem Werkzeugträger 16 eingesteckt wird.

Der Werkzeugträger 16 sitzt zunächst lose, mit einem Spiel in der Lagerbuchse 14. Um das Spiel zu beseitigen, werden die beiden Einstellschrauben 74 der Einstelleinrichtung 73 in die jeweiligen Gewindeeinsätze 62, 72 eingeschraubt. Hierzu kann ein Werkzeug, insbesondere hier ein Innensechskantschlüssel, durch das offene Ende der Radialbohrung 23 oder 24 in den Schlitz 77 eingeführt und angezogen werden. Bspw. wird zunächst die Einstellschraube 74 in den Gewindeeinsatz 62 eingeschraubt, bis das Schraubenende 78 mit dem Buchsenboden 67 in Berührung gelangt. Bei weiterem Anziehen der Einstellschraube 74 wird der Buchsenboden 67 zu dem Werkzeugträger 16 hin elastisch verformt und so in dem Lagerpunkt 61 mit der Außenumfangsfläche 37 des Werkzeugträgers 16 in Kontakt gebracht. Der Werkzeugträger 16 wird so radial gegen die zwei festen Lagerpunkte 27a, 27b und den verstellbaren Lagerpunkt 61 des ersten Dreipunkt-Lagers 58 festgesetzt, wobei jedes radiale Spiel an dem Lager 58 beseitigt wird.

Der Vorgang wird dann mit der zweiten Einstellschraube 74 in dem Gewindeeinsatz 72 wiederholt, durch deren Anziehen der Werkzeugträger 16 auch in dem zweiten Dreipunkt-Gleitlager 59 an drei Lagerpunkten 28a, 28b und 71 spielfrei gelagert wird.

Durch die zusätzliche, zweite Lagerebene wird auch eine geringfügige Einstellung der Ausrichtung des Werkzeugträgers 16 zu der Lagerbuchse 14 in Bezug auf die Längsachse A ermöglicht. Genauer gesagt, lässt sich der Werkzeugträger 16 in Bezug auf die Lagerbuchse 14 leicht "verkippen", so dass die Achse A der Lagerbuchse 14 und die Achse B des Werkzeugträgers 16 miteinander in Übereinstimmung gebracht und Rundlauffehler beseitigt werden können. Somit ermöglicht die Einstelleinrichtung 73 die Einstellung der relativen Ausrichtung zwischen dem Werkzeugträger 16 und der Lagerbuchse 14 sowie des relativen Spiels zwischen diesen in einer derartigen Weise, dass radiale Spiele und Rundlauffehler weitgehend beseitigt werden, gleichwohl eine leichte Verdrehbarkeit des Werkzeugträgers 16 in Bezug auf die Lagerbuchse 14 sichergestellt ist.

Vorteilhafterweise wirken die Schraubverbindungen zwischen den Einstellschrauben 74 und den Gewindebuchsen 63 selbstsichernd, weil jeder elastisch verformte Buchsenboden 67 einen Gegendruck auf die zugehörige Einstellschraube 74 ausübt und diese dadurch gegen Lockern hinreichend fixiert. Kontermechanismen sind nicht erforderlich.

Die erfindungsgemäße Dreipunktlagerung vermeidet Unzulänglichkeiten, wie sie bei statisch und dynamisch überbestimmten Lagern oder bei der Verwendung von Wälzlagern vorzufinden sind, und bildet die Grundlage für eine verschleißarme langlebige Funktionsweise und eine hohe Genauigkeit sowohl bei der Vorvermessung und Voreinstellung von Werkzeugen als auch bei der anschließenden Werkstückbearbeitung in einer Werkzeugmaschine.

Im Rahmen der vorliegenden Erfindung sind zahlreiche Modifikationen möglich. Bspw. ist die erfindungsgemäße Werkzeugaufnahme 13 im Zusammenhang mit einem Werkzeug-Voreinstellgerät 1 veranschaulicht und beschrieben, wobei die erfindungsgemäße Werkzeugaufnahme 13 auch für andere Anwendungen verwendet werden kann, in denen ein Werkzeug oder ein anderes Teil präzise drehbar gelagert werden muss. Außerdem können die Komponenten der erfindungsgemäßen Werkzeugaufnahme 13 zum Teil auch anders gestaltet sein. Z.B. braucht die Lagerbuchse 14 nicht unbedingt kreiszylindrisch gestaltet zu sein, und der Werkzeugträger 16 ist nicht unbedingt als Steilkegelhülse auszuführen. Die Werkzeugaufnahme 13 gemäß der veranschaulichten Ausführungsform weist jedoch einen bevorzugten, äußerst einfachen Aufbau auf, der eine Reduktion der Kosten für die Herstellung und Montage ermöglicht. Die verstellbaren dritten Lagerstellen 61, 71 der Dreipunkt-Gleitlager 58, 59 sind hier an den buchsenartigen Gewindeeinsätzen 62, 72 vorgesehen. Alternativ könnte ein Gewinde zum Einschrauben der Einstellschrauben 74 auch unmittelbar in der Radialbohrung 23, 24 vorgesehen sein und bspw. ein plättchenartiges elastisches Element an dem inneren Ende der Bohrung 23, 24 befestigt sein, das dann durch die Einstellschraube 74 gegen den Werkzeugträger 16 vorgespannt wird. Ebenfalls sind unterschiedliche Arten der Befestigung der erfindungsgemäßen Werkzeugaufnahme 13 an einem Werkzeug-Voreinstellgerät oder dergleichen möglich. Während die erfindungsgemäße Werkzeugaufnahme 13 für den manuellen Betrieb vorgesehen ist, lässt sich diese ohne weiteres für eine Kopplung mit einem Drehantrieb anpassen.

Es ist eine drehbare Werkzeugaufnahme 13 für ein Werkzeug-Voreinstellgerät oder dergleichen geschaffen, die einen Werkzeugträger 16 zur Aufnahme eines Werkzeugs und eine Lagerbuchse 14 aufweist, in der der Werkzeugträger 16 drehbar gelagert ist. Zur radialen Drehlagerung des Werkzeugträgers 16 in Bezug auf die Lagerbuchse 14 dient eine Lagereinrichtung 31, die zwei axial im Abstand zueinander angeordnete Dreipunkt-Gleitlager 58, 59 aufweist. Eine Einstelleinrichtung 73 ermöglicht eine Einstellung des radialen Spiels zwischen dem Wechselträger 16 und der Lagerbuchse 14 in jedem der Lager 58, 59.

## Patentansprüche

1. Drehbare Werkzeugaufnahme, insbesondere für ein Werkzeug-Voreinstellgerät,
mit einem Werkzeugträger (16) zur Aufnahme eines Werkzeugs (2);
mit einer Lagerbuchse (14), in der der Werkzeugträger (16) drehbar gelagert ist;
**dadurch gekennzeichnet, dass** zur radialen Drehlagerung des Werkzeugträgers (16.) in Bezug auf die Lagerbuchse (14) eine Lagereinrichtung (31) auf Basis einer Dreipunkt-Gleitlagerung vorgesehen ist;
wobei die Lagereinrichtung (31) ein erstes Dreipunktlager (58) und ein zweites Dreipunktlager (59) aufweist, die entlang einer Längsachse (A) der Werkzeugaufnahme (13) im Abstand zueinander angeordnet sind und jeweils drei punktartige Lagerstellen (27a, 27b, 61; 28a, 28b, 71) zur Lagerung des Werkezeugträgers (16) in der Lagerbuchse (14) aufweisen, wobei bei jedem Dreipunktlager (58, 59) die drei punktartigen Lagerstellen (27a, 27b, 61; 28a, 28b, 71) wenigstens eine bezüglich der Längsachse (A) der Werkzeugaufnahme (13) radial verstellbare Lagerstelle (61; 71) aufweisen.

2. Werkzeugaufnahme nach Anspruch 1, wobei der Werkzeugträger (16) in Form einer im Wesentlichen rotationssymmetrischen Hülse ausgebildet ist, die eine Außenumfangsfläche (37) und eine Innenumfangsfläche (38) zur formschlüssigen Aufnahme des Werkzeugs (2) aufweist.

3. Werkzeugaufnahme nach Anspruch 2, wobei die Hülse als Kegelhülse mit einem kegelstumpfförmigen Aufnahmeabschnitt (57) ausgebildet ist.

4. Werkzeugaufnahme nach Anspruch 1, wobei die Lagerbuchse (14) in Form eines Kreiszylinders mit einer äußeren Mantelfläche (17) und einer koaxialen inneren Mantelfläche (18) ausgebildet ist.

5. Werkzeugaufnahme nach Anspruch 1, wobei die Lagerbuchse (14) eine ringförmige Ausnehmung (33) aufweist, die zu einer Stirnfläche (21) und einer inneren Mantelfläche (18) der Lagerbuchse (14) hin offen ist und die durch eine innere Radialfläche (36) und eine äußere Axialfläche (34) definiert ist, wobei der Werkzeugträger (16) eine gestufte Außenumfangsfläche (37) mit einer axialen Schulter (46) aufweist, die einen zylindrischen Lagerabschnitt (41) mit verringertem Durchmesser mit einem koaxialen zylindrischen Endabschnitt (42) mit vergrößertem Durchmesser verbindet, und wobei die von der inneren Radialfläche (36), der äußeren Axialfläche (34), der axialen Schulter (46) und dem Lagerabschnitt (41) begrenzte Ausnehmung (33) einen Hohlraum (47) bildet, in dem ein Axiallager (48) angeordnet ist.

6. Werkzeugaufnahme nach Anspruch 1, wobei die Lagerstellen (27a, 27b, 61; 28a, 28b, 71) jedes Dreipunktlagers (58; 59) längs des Umfangs im Abstand von 120° zueinander angeordnet sind.

7. Werkzeugaufnahme nach Anspruch 1, wobei der Lagereinrichtung (31) eine Einstelleinrichtung (73) zugeordnet ist, die eine Einstellung des Spiels zwischen dem Werkzeugträger (16) und der Lagerbuchse (14) ermöglicht.

8. Werkzeugaufnahme nach Anspruch 1, wobei jedes Dreipunktlager (58, 59) zwei feste Lagerstellen (27a, 27b; 28a, 28b), die an einer inneren Mantelfläche (18) der Lagerbuchse (14) angeformt sind, und eine bzgl. der Längsachse (A) der Werkzeugaufnahme (13) radial verstellbare Lagerstelle (61; 71) aufweist.

9. Werkzeugaufnahme nach Anspruch 1 oder 8, wobei die wenigstens eine verstellbare Lagerstelle (61; 71) durch einen Einsatz (62) gebildet ist, der wenigstens bereichsweise elastisch verformbar ist und der in der Lagerbuchse (14) derart angeordnet ist, dass wenigstens sein elastisch verformbarer Bereich (67) in einen Innenraum (29) der Lagerbuchse (14) hinein, in Anlage gegen den Werkzeugträger gebracht werden kann.

10. Werkzeugaufnahme nach Anspruch 9, wobei der Einsatz (62) in Form einer Gewindebuchse (63) ausgebildet ist, die in der Lagerbuchse (14) eingesetzt ist und die einen hülsenförmigen Buchsenabschnitt (66) mit einem Innengewinde (68), ein offenes Ende (64) und ein durch einen Buchsenboden verschlossenes zweites Ende (67) aufweist, wobei der Buchsenboden (67) geringfügig elastisch verformbar ist.

11. Werkzeugaufnahme nach Anspruch 10, wobei die Gewindebuchse (63) in einer radialen Durchgangsbohrung (23; 24) der Lagerbuchse (14) derart eingebaut ist, dass ihr offenes Ende (64) von der Außenseite der Lagerbuchse (14) zugänglich ist und der Buchsenboden (67) radial nach innen weist und auf Höhe einer inneren Mantelfläche (18) der Lagerbuchse (14) abschließt.

12. Werkzeugaufnahme nach Anspruch 10, wobei der Gewindebuchse (63) eine Einstellschraube (74) zugeordnet ist, die ein Außengewinde (76) trägt, das mit dem Innengewinde (68) der Gewindebuchse (63) zusammenwirkt, und ein Schraubenende (78) aufweist, das eingerichtet ist, um mit dem Buchsenboden (67) der Gewindebuchse (63) in Eingriff zu kommen, um diesen elastisch zu verformen und mit einer Außenumfangsfläche (37) des Werkzeugträgers (16) in Kontakt zu bringen.

13. Werkzeugaufnahme nach Anspruch 12, wobei die Schraubverbindung zwischen der Einstellschraube (74) und der Gewindebuchse (63) aufgrund der elastischen Verformung des Buchsenbodens (67) selbstsichernd ist.

14. Werkzeugaufnahme nach Anspruch 8, wobei die verstellbaren Lagerstellen (61; 71) entlang der Achse (A) der Werkzeugannahme (13) in einer Linie zueinander ausgerichtet sind.

15. Werkzeugaufnahme nach Anspruch 9, wobei die verstellbaren Lagerstellen (61; 71) entlang der Achse (A) der Werkzeugannahme (13) in einer Linie zueinander ausgerichtet sind.

## Claims

1. Rotatably tool holder, in particular for a tool presetter,
with a tool support (16) to receive a tool (2);
with a bearing bush (14), in which the tool support (16) is rotatably mounted, **characterised in that** a bearing device (31) based on a three-point slide bearing arrangement is provided for radial rotational mounting of the tool support (16) in relation to the bearing bush (14);
wherein the bearing device (31) has a first three-point bearing (58) and a second three-point bearing (59), which are spaced from one another along a longitudinal axis (A) of the tool holder (13) and respectively have three point-like bearings (27a, 27b, 61; 28a, 28b, 71) for mounting the tool support (16) in the bearing bush (14), wherein at each three-point bearing (58, 59) the three point-like bearings (27a, 27b, 61; 28a, 28b, 71) have at least one bearing (61; 71), which is radially adjustable in relation to the longitudinal axis (A) of the tool holder (13).

2. Tool holder according to claim 1, wherein the tool support (16) is configured in the form of a substantially rotationally symmetric sleeve, which has an outer peripheral face (37) and an inner peripheral face (38) to receive the tool (2) in a positive-locking manner.

3. Tool holder according to claim 2, wherein the sleeve is configured as a taper sleeve with a truncated cone-shaped receiving section (57).

4. Tool holder according to claim 1, wherein the bearing bush (14) is configured in the shape of a circular cylinder with an outer shell face (17) and a coaxial inner shell face (18).

5. Tool holder according to claim 1, wherein the bearing bush (14) has a ring-shaped recess (33), which is open towards a face (21) and an inner shell face (18) or the bearing bush (14) and which is defined by an inner radial face (36) and an outer axial face (34), wherein the tool support (16) has a stepped outer peripheral face (37) with an axial shoulder (46), which connects a cylindrical bearing section (41) with a reduced diameter to a coaxial cylindrical end section (42) with an enlarged diameter, and wherein the recess (33) delimited by the inner radial face (36), the outer axial face (34), the axial shoulder (46) and the bearing section (41) forms a cavity (47), in which an axial bearing (48) is arranged.

6. Tool holder according to claim 1, wherein the bearings (27a, 27b, 61; 28a, 28b, 71) of each three-point bearing (58; 59) are arranged along the periphery at a distance of 120° from one another.

7. Tool holder according to claim 1, wherein the bearing device (31) has an associated adjusting device (73), which enables adjustment of the play between the tool support (16) and the bearing bush (14).

8. Tool holder according to claim 1, wherein each three-point bearing (58, 59) has two fixed bearings (27a, 27b; 28a, 28b), which are moulded on an inner shell face (18) of the bearing bush (14), and a bearing (61; 71) that is radially adjustable in relation to the longitudinal axis (A) of the tool holder (13).

9. Tool holder according to claim 1 or 8, wherein the at least one adjustable bearing (61; 71) is formed by an insert (62), which is elastically deformable at least in regions and which is arranged in the bearing bush (14) in such a manner that at least its elastically deformable region (67) can be brought into an inside space (29) of the bearing bush (14) in abutment against the tool holder.

10. Tool holder according to claim 9, wherein the insert (62) is configured in the form of a threaded socket (63), which is inserted into the bearing bush (14) and has a sleeve-shaped socket section (66) with an internal thread (68), an open end (64) and a second end (67) closed by a socket base, wherein the socket base (67) is slightly elastically deformable.

11. Tool holder according to claim 10, wherein the threaded socket (63) is mounted in a radial through bore (23; 24) of the bearing bush (14) in such a manner that its open end (64) is accessible from the outside of the bearing bush (14) and the socket base (67) points radially inwards and terminates at the level of an inner shell face (18) of the bearing bush (14).

12. Tool holder according to claim 10, wherein the threaded socket (63) has an associated adjusting screw (74), which bears an external thread (76) that cooperates with the internal thread (68) of the threaded socket (63), and a screw end (78), which is arranged to come into engagement with the socket base (67) of the threaded socket (63) in order to elastically deform this and bring it into contact with an outer peripheral face (37) of the tool support (16).

13. Tool holder according to claim 12, wherein the screw connection between the adjusting screw (74) and the threaded socket (63) is self-locking as a result of the elastic deformation of the socket base (67).

14. Tool holder according to claim 8, wherein the adjustable bearings (61; 71) arc oriented in a line in relation to one another along the axis (A) of the tool holder (13).

15. Tool holder according to claim 9, wherein the adjustable bearings (61; 71) are oriented in a line in relation to one another along the axis (A) of the tool holder (13).

## Revendications

1. Logement d'outil rotatif, destiné en particulier à un appareil de préréglage d'outil,
comprenant un porte-outil (16) destiné à recevoir un outil (2);
comprenant un coussinet (14) dans lequel le porte-outil (16) est monté avec possibilité de rotation;
**caractérisé en ce que** pour le montage rotatif radial du porte-outil (16) par rapport au coussinet (14), il est prévu un dispositif de support (31) sur la base d'un palier à glissement à trois points;
sachant que le dispositif de support (31) présente un premier palier à trois points (58) et un deuxième palier à trois points (59) qui sont disposés à distance l'un de l'autre le long d'un axe longitudinal (A) du logement d'outil (13) et présentent chacun respectivement trois emplacements d'appui ponctuels (27a, 27b, 61; 28a, 28b, 71) pour le montage du porte-outil (16) dans le coussinet (14), sachant que dans chaque palier à trois points (58, 59) les trois emplacements d'appui ponctuels (27a, 27b, 61; 28a, 28b, 71) comportent au moins un emplacement d'appui (61; 71) pouvant être réglé radialement par rapport à l'axe longitudinal (A) du logement d'outil (13).

2. Logement d'outil selon la revendication 1, dans lequel le porte-outil (16) est réalisé sous la forme d'une douille sensiblement symétrique de révolution, qui présente une surface périphérique extérieure (37) et une surface périphérique intérieure (38) en vue de la réception mécanique de l'outil (2).

3. Logement d'outil selon la revendication 2, dans lequel la douille est réalisée sous forme de douille conique avec une partie de réception (57) tronconique.

4. Logement d'outil selon la revendication 1, dans lequel le coussinet (14) est réalisé sous la forme d'un cylindre circulaire avec une surface enveloppe (17) extérieure et une surface enveloppe (18) intérieure coaxiale.

5. Logement d'outil selon la revendication 1, dans lequel le coussinet (14) présente un évidement (33) annulaire qui est ouvert en direction d'une face frontale (21) et d'une surface enveloppe (18) intérieure du coussinet (14) et qui est défini par une surface radiale (36) intérieure et une surface axiale (34) extérieure, sachant que le porte-outil (16) présente une surface périphérique extérieure (37) étagée, dotée d'un épaulement (46) axial qui relie une partie de support (41) cylindrique, de diamètre réduit, à une partie d'extrémité (42) cylindrique coaxiale, de diamètre augmenté, et sachant que l'évidement (33), délimité par la surface radiale (36) intérieure, la surface axiale (34) extérieure, l'épaulement (46) axial et la partie de support (41), forme une cavité (47) dans laquelle est disposé un palier axial (48).

6. Logement d'outil selon la revendication 1, dans lequel les points d'appui (27a, 27b, 61; 28a, 28b, 71) de chaque palier à trois points (58; 59) sont disposés le long de la circonférence en étant espacés de 120° les uns des autres.

7. Logement d'outil selon la revendication 1, dans lequel est associé au dispositif de support (31), un dispositif de réglage (73) qui permet de régler le jeu entre le porte-outil (16) et le coussinet (14).

8. Logement d'outil selon la revendication 1, dans lequel chaque palier à trois points (58, 59) présente deux points d'appui (27a, 27b; 28a, 28b) fixes, qui sont façonnés sur une surface enveloppe (18) intérieure du coussinet (14), et un point d'appui (61; 71) qui peut être réglé radialement par rapport à l'axe longitudinal (A) du logement d'outil (13).

9. Logement d'outil selon la revendication 1 ou 8, dans lequel le point d'appui (61; 71) réglable, au nombre d'au moins un, est constitué d'un insert (62) qui peut être déformé élastiquement au moins par endroits et qui est disposé dans le coussinet (14) de manière telle qu'au moins sa zone (67) élastiquement déformable puisse être amenée dans un espace intérieur (29) du coussinet (14) pour venir en appui contre le porte-outil.

10. Logement d'outil selon la revendication 9, dans lequel l'insert (62) est réalisé sous la forme d'une douille taraudée (63) qui est montée dans le coussinet (14) et qui présente une partie de douille (66) en forme de manchon, dotée d'un taraudage (68), une extrémité (64) ouverte et une deuxième extrémité (67) fermée par un fond de douille, le fond de douille (67) pouvant être déformé avec une légère élasticité.

11. Logement d'outil selon la revendication 10, dans lequel la douille taraudée (63) est montée dans un trou débouchant (23; 24) radial du coussinet (14), de manière telle que son extrémité (64) ouverte soit accessible depuis la face extérieure du coussinet (14) et le fond de douille (67) soit tourné radialement vers l'intérieur et se termine à hauteur d'une surface enveloppe (18) intérieure du coussinet (14).

12. Logement d'outil selon la revendication 10, dans lequel est associée à la douille taraudée (63), une vis de réglage (74) qui porte un filetage extérieur (76), lequel coopère avec le taraudage (68) de la douille taraudée (63), et présente une extrémité de vis (78) qui est conçue pour entrer en prise avec le fond de douille (67) de la douille taraudée (63) afin de déformer celui-ci élastiquement et l'amener en contact avec une surface périphérique extérieure (37) du porte-outil (16).

13. Logement d'outil selon la revendication 12, dans lequel l'assemblage vissé entre la vis de réglage (74) et la douille taraudée (63) est autobloquant du fait de la déformation élastique du fond de douille (67).

14. Logement d'outil selon la revendication 8 dans lequel les points d'appui (61; 71) réglables sont orientés le long de l'axe (A) du logement d'outil (13), en ligne l'un avec l'autre.

15. Logement d'outil selon la revendication 9, dans lequel les points d'appui (61; 71) réglables sont orientés le long de l'axe (A) du logement d'outil (13) en ligne l'un avec l'autre.
